(19) Europäisches Patentamt
European Patent Office
Office européen des brevets

(11) **EP 2 746 812 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **13005662.5**

(22) Anmeldetag: **05.12.2013**

(51) Int Cl.:
*G01S 19/13* (2010.01)     *H04B 7/10* (2017.01)
*H04B 7/185* (2006.01)     *G01S 19/36* (2010.01)
*H04B 7/08* (2006.01)     *H04B 1/10* (2006.01)

(54) **Verfahren und Empfänger zum Verarbeiten eines Navigationssatelliten-Signals**

Method and receiver for processing a navigation satellite signal

Procédé et récepteur de traitement d'un signal de satellite de navigation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2012 DE 102012025319**

(43) Veröffentlichungstag der Anmeldung:
**25.06.2014 Patentblatt 2014/26**

(73) Patentinhaber: **Diehl Defence GmbH & Co. KG**
**88662 ÜBERLINGEN (DE)**

(72) Erfinder: **Wachtl, Stefan**
**97422 Schweinfurt (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**EP-A1- 1 720 265**     **EP-A2- 1 154 589**
**WO-A1-99/09650**     **WO-A1-99/56339**
**CN-U- 202 471 970**     **US-A1- 2002 071 481**
**US-A1- 2010 265 875**

## Beschreibung

Die Erfindung betrifft ein Verfahren zum empfangsseitigen Verarbeiten eines Navigationssatelliten-Signals sowie einen hierzu ausgestalteten Empfänger. Solche Verfahren bzw. Empfänger sind aus der EP 1 154 589 A2, aus der US 2010/265875 A1, aus der EP 1 720 265 A1, aus der WO 99/56339 A1, aus der CN 202 471 970 U, aus der WO 99/09650 A1 und aus der US 2002/071481 A1 bekannt. Die Erfindung beschäftigt sich insbesondere damit, auf der Empfangsseite das Signal-zu-Rausch-Verhältnis zu verbessern.

In der Regel ist die Empfangsstärke eines Navigationssatelliten-Signals auf der Erdoberfläche kleiner als das Empfängerrauschen. Die Nutzsignalleistung eines Navigationssatelliten-Signals auf der Erdoberfläche beträgt etwa -130 dBm und entspricht damit auf die Nutzbandbreite von Navigationssatelliten-Signalen bezogen in etwa der Rauschleistung des Himmels. Die Rauschleistung der zum Empfang benötigten HF-Verstärker ist in der Regel größer als -130 dBm. Dementsprechend wird ein Navigationssatelliten-Signal mittels geeigneter Übertragungstechnologien, insbesondere mittels einer Spreiztechnologie, übertragen, so dass empfangsseitig seine Identifizierung ermöglicht ist.

Es ist jedoch wünschenswert, auch bei einem Navigationssatelliten-Signal den Abstand zwischen dem Nutzsignal und dem Empfängerrauschen zu vergrößern. Zum einen kann hierdurch die Leistungsfähigkeit und Empfindlichkeit von Ortungssystemen zur terrestrischen Standortbestimmung (z. B. GPS- oder GNSS-Systeme) verbessert werden. Zum anderen erlaubt ein vergrößerter Abstand zwischen dem Nutzsignal und dem Empfängerrauschen aber auch eine Analyse des Empfangssignals auf leistungsschwächere Anteile, wie z. B. auf im Empfangssignal enthaltene Mehrwegesignalanteile. Während üblicherweise in Ortungssystemen im Empfangssignal enthaltene Mehrwegesignalanteile zur Verbesserung der Ortsempfindlichkeit entfernt werden, können andererseits die enthaltenen Mehrwegesignalanteile aber auch zum Erkennen von Luftraumbedrohungen, wie z. B. von in den Luftraum eindringenden Flugzeugen, Drohnen oder dergleichen, herangezogen werden. Bei einer derartigen Auswertung von Navigationssatelliten-Signalen spricht man auch von einem so genannten Passiv-Radar. Für eine Passiv-Radar Anwendung sind gerade die im Empfangssignal enthaltenen Mehrwegesignale von Interesse.

Eine Verbesserung des Signal-zu-Rausch-Verhältnisses (SNR) kann grundsätzlich über mehrere Maßnahmen erzielt werden. Die Vergrößerung des SNR kann beispielsweise durch eine Reduzierung der Signalbandbreite im Empfänger mit Hilfe von Regelschleifen erfolgen. Durch die Verwendung derartiger Regelschleifen sind jedoch kurzzeitige Mehrwegesignale nicht mehr auswertbar, da diese durch die Regelung unterdrückt werden. Eine Reduzierung des Empfängerrauschens und damit eine Vergrößerung des SNR kann andererseits auch durch eine Kühlung des Empfängers erreicht werden. Mit einer Kühlung kann jedoch, abhängig von der Signalbandbreite, nur mit einem hohen technischen Aufwand, wie z. B. mit einer Heliumkühlung, eine merkliche Reduzierung des Empfängerrauschens erzielt werden. Des Weiteren besteht die Möglichkeit einer kohärenten Integration der Navigationssatelliten-Signale. Da Mehrwegsignale jedoch keine dauerhaften Signalanteile liefern, sondern nur kurzzeitig "aufblitzen", ist eine lang andauernde kohärente Integration der Signale nicht sinnvoll. Darüber hinaus führt eine längere Integration gegebenenfalls zu einer Dekorrelation des Empfangssignals. Ferner besteht die Möglichkeit der Verwendung einer hochbündelnden Antenne, wodurch das Nutzsignal bereits verstärkt empfangen werden kann. Dem erreichbaren Antennengewinn sind aber aus technischen und wirtschaftlichen Gründen Grenzen gesetzt.

Der Erfindung liegt daher die Aufgabe zugrunde, das Signal-zu-Rausch-Verhältnis beim Empfang eines Navigationssatelliten-Signals mit einem möglichst geringen technischen Aufwand so zu verbessern, dass insbesondere auch die Identifikation von im Nutzsignal enthaltenen Mehrwegesignalen erleichtert wird.

Diese Aufgabe wird durch das Verfahren zum Verarbeiten eines Navigationssatelliten-Signals gemäß Anspruch 1 gelöst.

In einem ersten Schritt erkennt die Erfindung, dass der größte Rauschanteil in einem System zum Empfang und zur Verarbeitung von Navigationssatelliten-Signalen durch den Empfänger selbst verursacht wird. In einem zweiten Schritt geht die Erfindung von der Überlegung aus, dass das Rauschen von zwei oder mehreren Empfängern statistisch voneinander unabhängig ist. Wird daher das empfangene Navigationssatelliten-Signal parallel über mehrere getrennte Empfangszweige geführt und anschließend wieder zu einem Summensignal aufaddiert, so addieren sich deterministische Signalanteile, also das Nutzsignal, N-fach auf, während sich statistische Signalanteile, also das Rauschen, nur mit

$$\sqrt{N}$$

(also sqrt(N)-fach, Wurzelaus-N-fach) aufaddiert, wobei N die Anzahl der getrennten Empfangszweige bezeichnet. Wird demnach das Empfangssignal über mehrere getrennte Empfangszweige geleitet und anschließend wieder zu einem Summensignal addiert, so kann hierdurch der Abstand des Nutzsignals zum Empfängerrauschen vergrößert werden.

Das Summensignal kann hierbei durch eine analoge oder digitale Addition der Einzelsignale, also durch eine Überlagerung, oder durch eine kohärente Integration gebildet werden. Da bei der Integration der Einzelsignale stets dasselbe Zeitstück der vielfachen Empfangszweige integriert wird, kann auch von einer Pseudo-Integration gesprochen werden. Bei der Aufaddierung zum Summensignal ist der deterministische Signalanteil immer der gleiche, der Rauschanteil jedoch unterschiedlich.

Die Erfindung bietet den Vorteil einer zusätzlichen Verbesserung des SNR bzw. einer scheinbaren Reduzierung des Empfängerrauschens und führt somit zu einer verbesserten Empfindlichkeit eines Empfängers für Navigationssatelliten-Signale. Die Erfindung kann insofern auch in üblichen Ortungssystemen zu einer technischen Verbesserung eingesetzt werden, obschon die Empfindlichkeit des Empfängers auf normalem Signalverarbeitungsweg ausreichend ist, um eine Eigenpositionsbestimmung in üblichen Anwendungsfällen vorzunehmen. Für eine Auswertung eines Navigationssatelliten-Signals hinsichtlich Mehrwegesignalanteilen, deren Signalstärke unterhalb des eigentlichen Nutzsignals liegt, ist jedoch die durch die Erfindung mögliche Reduzierung des SNR von großem Vorteil. Dank der guten Verfügbarkeit von hochintegrierten HF-Empfangsbausteinen für Navigationssatelliten-Signale mit den dazugehörigen Komponenten liegen die Mehrkosten für die Parallelisierung der Empfangszweige in einem vertretbaren Rahmen.

Bei einer bloßen Aufteilung des Empfangssignals auf mehrere Empfangszweige, beispielsweise durch einen Mehrwege-Splitter, verschlechtert sich in den einzelnen Empfangszweigen durch die Verringerung des Nutzsignalanteils das Signal-zu-Rausch-Verhältnis. Beispielsweise verringert sich bei einem Zwei-Wege-Splitter durch die Halbierung des Nutzsignalanteils das Signal-zu-Rausch-Verhältnis um -3 dBm. Obschon sich beim Zusammenführen der Einzelsignale deterministische Signalanteile (Nutzsignal) kohärent und nicht-deterministische Signalanteile (Rauschsignal) inkohärent aufaddieren, kann insofern bei gleichem Verstärkerrauschen in den einzelnen Empfangszweigen gegenüber einem einzelnen Empfangszweig das SNR nicht verbessert werden. Um eine Verbesserung des SNR durch eine Parallelisierung der Empfangszweige mit gleichem Aufbau gegenüber einem einzelnen Empfangszweig zu erhalten, wird daher das Navigationssatelliten-Signal aktiv in die Einzelsignale vervielfacht. Mit anderen Worten wird das Navigationssatelliten-Signal nicht mit einem Splitter passiv zerlegt, sondern es wird erfindungsgemäß unter Verstärkung des Nutzsignal-Anteils auf die mehreren Empfangszweige vervielfacht. Auf diese Weise wird in den Empfangszweigen die Signalleistung der Einzelsignale erhöht, so dass sich auch bei gleichem Verstärkerrauschen gegenüber einem einzelnen Empfangszweig im Summensignal das SNR verbessern lässt.

Bevorzugt wird das Navigationssatelliten-Signal mittels einer Mehrzahl von jeweils den Empfangszweigen zugeordneten aktiven Tastköpfen oder Transimpedanzverstärkern vervielfacht. Bei einem derartigen aktiven Signalverstärker erfolgt keine Leistungsübertragung von der Antennenseite in die Empfangszweige. Die Signalverstärkung bzw. Vervielfachung des Empfangssignals erfolgt durch Zufuhr von Strom und/oder Spannung im jeweiligen Verstärker.

Ein aktiver HF-Tastkopf hat insbesondere die Eigenschaft, in ein abgeschlossenes HF-System (z. B. 50 Ohm-Abschluss) messen bzw. tasten zu können. Der Tastkopf ist dabei so konzipiert, dass er die Eigenschaften des geschlossenen HF-Systems nicht beeinflusst und damit die Messumgebung nicht verfälscht. Das Messen bzw. Tasten des HF-Signals durch den Tastkopf erfolgt somit leistungslos bzw. aus Sicht der HF-Technik hochohmig. Das vom Tastkopf erfasste HF-Nutzsignal wird von diesem verstärkt und weitergeleitet. Die begrenzende Rauschgröße ist dabei das Rauschverhalten des Tastkopfs bzw. der Komponenten im weiteren Signalweg. Durch mehrere HF-Tastköpfe wird es möglich, gleichzeitig leistungslos in ein geschlossenes HF-System zu tasten. Ein Nutzsignal wird somit vervielfacht. Die Zufuhr an dafür benötigter Nutzsignalleistung (bei Aufteilung auf zwei Empfangszweige sind dies jeweils 3 dB) erfolgt durch den jeweiligen aktiven Tastkopf. Im Idealfall kann ein HF-Signal N-mal vervielfacht werden.

Grundsätzlich ist dieses Prinzip N-fach erweiterbar, wobei sich durch eine N-fache Parallelisierung der Empfangszweige der Integrationsgewinn der deterministischen Signalanteile gegenüber den nicht-deterministischen Signalanteilen weiter erhöhen ließe. In der Realität addieren sich jedoch bei einem parallelen Tasten der HF-Signale deren Einflussnahmen auf das HF-Signal (z. B. durch reale Kapazitäten), so dass eine beliebige Parallelisierung um N Empfangszweige technisch nicht sinnvoll ist. Darüber hinaus geht zu einer Steigerung des Signal-zu-Rausch-Verhältnisses die Anzahl der parallelen Empfangszweige logarithmisch ein. Der schaltungstechnische Aufwand steigt somit exponentiell.

Im Prinzip besteht ein geeigneter aktiver HF-Tastkopf aus einem rauscharmen Feldeffekttransistor (FET), der als Puffer zwischen dem zu messenden System und dem Auswertesystem dient. Die Anpassung des Transistors ist dabei so auszulegen, dass der Gate-Eingang HF-technisch möglichst hochohmig wirkt und der Ausgangskreis (Drain-Source) an den Abschlusswiderstand (z. B. 50 Ohm) angepasst wird. Idealerweise sollte der Transistor dabei rauschangepasst sein. Technisch ist zurzeit eine Rauschzahl von 0,5 dB erreichbar. Dabei sind Grenzfrequenzen bis ca. 6 GHz erreichbar.

Transimpedanzverstärker werden insbesondere in HF-optischen Wandlerstrecken verwendet. Dabei wird ein HF-Signal eingangsseitig spannungsmäßig erfasst und ausgangsseitig in ein Strom-Spannungs-Signal umgewandelt. Am Eingang weisen derartige Verstärker eine Impedanz von mehreren kΩ auf, während der Ausgang beispielsweise bereits auf einen Abschlusswiderstand von 50 Ohm angepasst ist. Mit Transimpedanzverstärkern sind Grenzfrequenzen bis ca. 10 GHz erreichbar. Die Rauschzahl der Transimpedanzverstärker liegt etwa in dem Bereich von normalen HF-Verstärkern. Die Rauschzahl von rauscharmen HF-Verstärkern wird jedoch in der Regel nicht erreicht.

Die für Verstärker/Transistoren angegebene Rauschzahl kann in eine effektive Rauschtemperatur umgerechnet werden, woraus eine auf die Bandbreite bezogene Rauschleistung berechnet werden kann. Beispielhaft entspricht eine Rauschzahl von 0,5 dB bei einer Verstärkertemperatur von 290 K und einer Nutzsignalbandbreite von 2,046 MHz etwa einer Rauschleistung von -120 dBm.

Obschon - wie ausgeführt - sich die Erfindung grundsätzlich zur Verbesserung der Empfindlichkeit von Ortungssystemen eignet, kann die Erfindung in einem bevorzugten Anwendungsfall insbesondere im Sinne eines Passiv-Radars dazu eingesetzt werden, das generierte Summensignal auf Mehrwegesignalanteile zu untersuchen. Dabei bietet die Erfindung den großen Vorteil, dass durch die Parallelisierung der Empfangszweige ein verbessertes Signal-zu-Rausch-Verhältnis erzeugt wird, ohne dass Mehrwegesignale reduziert werden.

Um die Einzelsignale nach Durchlaufen der mehreren Empfangszweige insbesondere kohärent aufaddieren bzw. integrieren zu können, empfiehlt es sich, die Empfangszweige mit im Wesentlichen gleichen Phasenverhalten auszuführen. Zweckmäßigerweise sind die Empfangszweige hinsichtlich der eingesetzten elektronischen Komponenten baugleich ausgeführt.

Die Einzelsignale werden in den Empfangszweigen zudem erfindungsgemäß gefiltert, verstärkt und frequenzkonvertiert. Zur Frequenzkonvertierung ist beispielsweise ein entsprechender Frequenzmischer vorgesehen, dem eine feste Frequenz zur Mischung bzw. Aufmultiplikation zugeführt ist. Eine Frequenzkonvertierung bietet sich insbesondere an, um die Einzelsignale oder auch das Summensignal bei einer digitalen Weiterverarbeitung in einen für den entsprechenden Analog-Digital-Wandler geeigneten Frequenzbereich umzusetzen. Der Empfangszweig als solcher ist bevorzugt hochintegriert ausgeführt, insbesondere als ein integrierter Schaltkreis ausgebildet.

In einer bevorzugten Weiterbildung werden die Einzelsignale als Analogsignale zu einem analogen Summensignal aufaddiert, wobei das analoge Summensignal zur Analyse auf Mehrwegesignalanteile digitalisiert wird. Der Analog-Digital-Wandler verfügt bevorzugt über eine hohes eigenes Signal-zu-Rausch-Verhältnis. Im Besonderen sollte er über eine hohe Bit-Auflösung, beispielsweise von 8 Bit bis 16 Bit, verfügen.

In einer anderen vorteilhaften Ausgestaltung werden die Einzelsignale zunächst digitalisiert und die digitalisierten Einzelsignale zu einem digitalen Summensignal aufaddiert. Durch die Anordnung der einzelnen Analog-Digital-Wandler in den Empfangszweigen wird deren statistisch unabhängiges Rauschen ebenfalls mit integriert, so dass sich insgesamt das SNR gegenüber einer analogen Aufaddierung noch weiter verbessern lässt. Allerdings sind die umzusetzenden Datenmengen gegenüber der analogen Aufaddierung höher (deren Anzahl steigt mit der Anzahl N an Empfangszweigen quadratisch an). Auch sind die Materialkosten durch die Mehrzahl an Analog-Digital-Wandlern erhöht.

Die zum Empfang des Navigationssatelliten-Signals eingesetzte Antenne kann insbesondere eine mit hohem Gewinn ausgestattete Bündelantenne sein. Hierdurch kann die Nutzsignalleistung gegenüber der Rauschleistung weiter angehoben werden. Eine derartige Antenne schränkt jedoch das Sichtfeld für Satelliten ein.

Die gestellte Aufgabe wird weiter durch einen Empfänger für ein Navigationssatelliten-Signal gemäß Anspruch 8 gelöst.

Weitere Ausführungsvarianten des Empfängers ergeben sich aus den entsprechenden Unteransprüchen. Dabei können die für das Verfahren genannten Vorteile sinngemäß auf den Empfänger übertragen werden.

Insbesondere ist erfindungsgemäß der Signalverteiler als ein aktiver Signalvervielfacher ausgebildet. In einer bevorzugten Ausgestaltung ist der Signalvervielfacher als eine Mehrzahl von den Empfangszweigen jeweils zugeordneten aktiven Tastköpfen oder Transimpedanzverstärkern ausgebildet. Bevorzugt ist die Auswerteeinheit eingerichtet, das zugeführte Signal auf Mehrwegesignalanteile zu untersuchen.

In einer weiter bevorzugten Ausgestaltung ist der Signaladdierer ein Analogaddierer, wobei zwischen dem Signaladdierer und der Auswerteeinheit ein Analog-Digital-Wandler angeordnet ist. In einer anderen bevorzugten Ausgestaltung ist in jedem Empfangszweig ein Analog-Digital-Wander angeordnet, wobei der Signaladdierer ein Digitaladdierer ist.

Ausführungsbeispiele der Erfindung werden anhand einer Zeichnung näher erläutert. Dabei zeigen:

Fig. 1: schematisch ein Ausführungsbeispiel eines Empfängers für Navigationssatelliten-Signale mit parallelen Empfangszweigen und einem analogen Signaladdierer,

Fig. 2: schematisch einen Empfänger für Navigationssatelliten-Signale mit parallelen Empfangszweigen und mit in den Empfangszweigen angeordneten Analog-Digital-Wandlern,

Fig. 3: schematisch einen Empfänger für Navigationssatelliten-Signale mit einem einzigen Empfangszweig (Stand der Technik), und

Fig. 4: schematisch einen Empfänger für Navigationssatelliten-Signale mit parallelen Empfangszweigen und einem aktiven Signalvervielfacher.

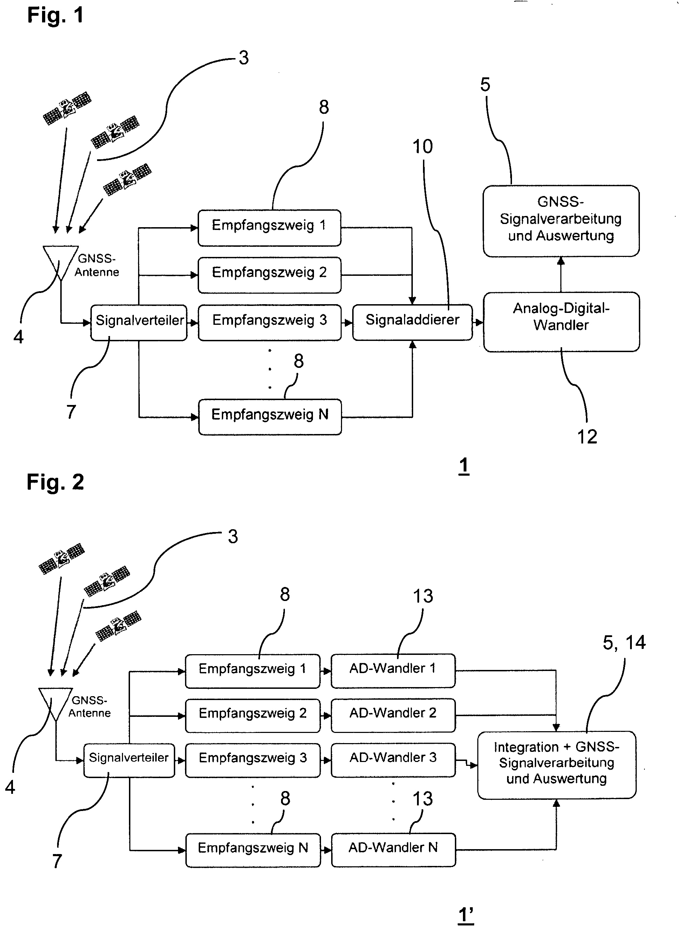

In Fig. 1 ist schematisch ein Empfänger 1 für Navigationssatelliten-Signale 3 dargestellt. Der Empfänger 1 umfasst zum Empfang der Navigationssatelliten-Signale 3 eine Antenne 4. Die im Empfänger verarbeiteten Signale werden einer Auswerteeinheit 5 zur Gewinnung einer Nutzinformation zugeleitet. Der vorliegende Empfänger ist zum Empfang und zur Verarbeitung bzw. Auswertung von GNSS-Signalen ausgebildet.

Die von der Antenne 4 empfangenen Signale werden mittels eines Signalverteilers 7 als Einzelsignale auf mehrere parallele Empfangszweige 8 vervielfacht. Nach Durchlaufen der mehreren Empfangszweige 8 werden die Einzelsignale mittels eines analogen Signaladdierers 10 zu einem Summensignal aufaddiert. Das gegebenenfalls frequenzkonvertierte Summensignal wird in einem Analog-Digital-Wandler mit hoher Bit-Auflösung digitalisiert. Das digitalisierte Signal wird in der Auswerteinheit 5 auf Nutzinformation untersucht. Insbesondere wird das digitalisierte Summensignal auf Mehrwegsignalanteile im Sinne eines Passivradars ausgewertet.

Da das Empfängerrauschen in den einzelnen Empfangszweigen 8 statistisch unabhängig ist, addieren sich im Summensignal die deterministischen Anteile (Nutzsignal) kohärent und die nicht-deterministischen Anteile (Rauschsignal) inkohärent. Insgesamt lässt sich hierdurch das Signal-zu-Rausch-Verhältnis auf der Empfängerseite gegenüber einem Empfänger mit nur einem einzigen Empfangszweig verbessern. Im Navigationssatelliten-Signal enthaltene Mehrwegsignalanteile werden hierdurch nicht reduziert. Vielmehr können derartige Mehrwegsignalanteile durch die verbesserte SNR messtechnisch einfacher herausgelöst bzw. analysiert werden.

In Fig. 2 ist ein gegenüber Fig. 1 abgewandelter Empfänger 1' für Navigationssatelliten-Signale dargestellt. Auch der Empfänger 1' eignet sich zum Empfang und zur Auswertung von GNSS-Signalen. Im Unterschied zu Fig. 1 ist nun in den einzelnen Empfangszweigen 8 jeweils ein Analog-Digital-Wandler 13 angeordnet. Die Aufaddierung der Einzelsignale erfolgt digital. Die Auswerteinheit 5 umfasst hierzu entsprechend einen digitalen Signaladdierer 14. Der abgewandelte Empfänger 1' ermöglicht es gegenüber dem Empfänger 1, das Signal-zu-Rausch-Verhältnis weiter zu verbessern. Das statistische Rauschen der einzelnen Analog-Digital-Wandler 13 in den einzelnen Empfangszweigen 8 wird im digitalen Addierer 14 inkohärent aufaddiert.

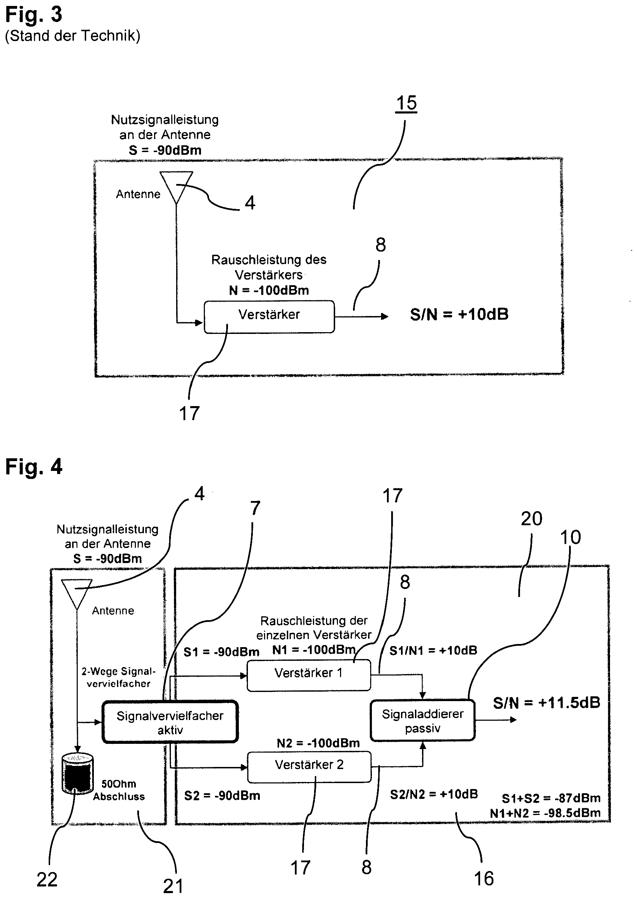

In Fig. 3 ist schematisch ein Empfänger 15 gemäß Stand der Technik dargestellt, der nur einen einzigen Empfangszweig 8 umfasst. Wird die Nutzsignalleistung an der Antenne 4 mit S = -90 dBm angenommen und die Rauschleistung des im Empfangszweig 8 angeordneten Verstärkers mit N = -100 dBm angenommen, so ergibt sich für den Empfänger 15 ein Signal-zu-Rausch-Verhältnis von S/N von +10 dB.

Im Unterschied hierzu ist in Fig. 4 ein Empfänger 16 für Navigationssatelliten-Signale dargestellt, der zwei getrennte Empfangszweige 8 umfasst. Das Nutzsignal an der Antenne 4 wird mit einem aktiven Signalvervielfacher auf die beiden Empfangszweige 8 vervielfacht. Die Verstärker- oder die eigentliche Empfangsseite 20 ist als ein abgeschlossenes 50 Ohm-System ausgeführt. Ebenso ist die Antennenseite 21 mit einem 50 Ohm-Abschluss 22 versehen.

Wiederum wird eine Nutzsignalleistung an der Antenne 4 von S = -90 dBm angenommen. Nach aktiver Signalvervielfachung liegt diese Nutzsignalleistung auch in den beiden Empfangszweigen 8 an (S1 = -90 dBm; S2 = -90 dBm). In beiden Empfangszweigen wird bei identischen Verstärkern 17 eine Rauschleistung dieser Verstärker von N1 = -100 dBm und von N2 = -100 dBm angenommen. Folglich liegt in den beiden Empfangszweigen 8 ein Signal-zu-Rausch-Verhältnis von S1/N1 = S2/N2 = +10 dB vor.

Durch entsprechend logarithmische Berechnung ergibt sich im Summensignal am Signaladdierer 10 eine Nutzsignalleistung von S1 + S2 = -87 dBm und eine Rauschleistung von N1 + N2 = -98,5 dBm. Für das Summensignal ergibt sich somit ein Signal-zu-Rausch-Verhältnis von S/N = +11,5 dB.

Es wird somit ersichtlich, dass durch Parallelisierung der Empfangszweige entsprechend dem Empfänger 16 gegenüber einem Empfänger 15 nach Stand der Technik, der lediglich einen einzelnen Empfangszweig aufweist, eine Verbesserung des Signal-zu-Rausch-Verhältnisses um 1,5 dB erzielen lässt.

Bei der angegebenen Betrachtung ist die Empfangsrauschleistung der Antenne vernachlässigt. Der aktive Signalvervielfacher ist als idealisiert angesehen. Die Verstärkungspfade in den Empfangszweigen sind als ideal und phasengleich angenommen.

## Bezugszeichenliste

| | |
|---|---|
| 1,1' | Empfänger |
| 3 | Navigationssatelliten-Signal |
| 4 | Antenne |
| 5 | Auswerteinheit |
| 7 | Signalverteiler |
| 8 | Empfangszweig |
| 10 | Signaladdierer (analog) |
| 12 | Analog-Digital-Wandler |
| 13 | Analog-Digital-Wandler |
| 14 | Signaladdierer (digital) |
| 15 | Empfänger (Stand der Technik) |
| 16 | Empfänger |
| 17 | Verstärker |
| 20 | Verstärkerseite |
| 21 | Antennenseite |
| 22 | 50-Ohm-Abschluss |

## Patentansprüche

1. Verfahren zum Verarbeiten eines Navigationssatelliten-Signals (3),
   wobei das Navigationssatelliten-Signal (3) empfangsseitig in eine Mehrzahl von Einzelsignalen überführt wird,
   wobei die mehreren Einzelsignale auf getrennte Empfangszweige (8) geführt werden,
   **dadurch gekennzeichnet, dass**
   das Navigationssatelliten-Signal (3) unter Verstärkung des Nutzsignalanteils in die Einzelsignale auf den Empfangszweigen (8) vervielfacht wird, und diese Einzelsignale in den Empfangszweigen (8) gefiltert, verstärkt und frequenzkonvertiert werden, dass die Einzelsignale nach Durchlaufen der getrennten Empfangszweige (8) zu einem Summensignal aufaddiert werden,

und dass das Summensignal zur Gewinnung einer Nutzinformation herangezogen wird.

2. Verfahren nach Anspruch 1,
   wobei das Navigationssatelliten-Signal (3) mittels einer Mehrzahl von jeweils den Empfangszweigen (8) zugeordneten aktiven Tastköpfen oder Transimpedanzverstärkern vervielfacht wird.

3. Verfahren nach einem der vorhergehenden Ansprüche,
   wobei das Summensignal auf Mehrwegesignalanteile untersucht wird.

4. Verfahren nach einem der vorhergehenden Ansprüche,
   wobei die mehreren Einzelsignale auf Empfangszweige (8) mit gleichem Phasenverhalten geführt werden.

5. Verfahren nach Anspruch 4,
   wobei die mehreren Einzelsignale auf identisch ausgeführte Empfangszweige (8) geführt werden.

6. Verfahren nach einem der vorhergehenden Ansprüche,
   wobei die Einzelsignale analog zum Summensignal aufaddiert werden, und
   wobei das analoge Summensignal zur Analyse auf Mehrwegesignalanteile digitalisiert wird.

7. Verfahren nach einem der Ansprüche 1 bis 5,
   wobei die Einzelsignale digitalisiert werden, und wobei die digitalisierten Einzelsignale zu einem digitalen Summensignal aufaddiert werden.

8. Empfänger (1, 1', 16) für ein Navigationssatelliten-Signal (3) mit einer Antenne (4), mit einem Signalverteiler (7), mit einer Mehrzahl von Empfangszweigen (8), mit einem Signaladdierer (10, 14) und mit einer Auswerteeinheit (5) zur Gewinnung einer Nutzinformation, wobei der Signalverteiler (7) eingangsseitig mit der Antenne (4) und ausgangsseitig mit den mehreren Empfangszweigen (8) verbunden ist, und wobei der Signaladdierer (10, 14) eingangsseitig mit den mehreren Empfangszweigen (8) und ausgangsseitig mit der Auswerteeinheit (5) verbunden ist,
   **dadurch gekennzeichnet, dass**
   der Signalverstärker (7) als ein aktiver Signalvervielfacher ausgebildet ist, welcher eingerichtet ist, das Navigationssatelliten-Signal (3) unter Verstärkung des Nutzsignalanteils in Einzelsignale auf den Empfangszweigen (8) zu vervielfachen, und in den Empfangszweigen (8) Einrichtungen zur Filterung, Verstärkung und Frequenzkonvertierung dieser Einzelsignale vorgesehen sind.

9. Empfänger (1, 1', 16) nach Anspruch 8,
   wobei der Signalvervielfacher als eine Mehrzahl von den Empfangszweigen (8) jeweils zugeordneten aktiven Tastköpfen oder Transimpedanzverstärkern ausgebildet ist.

10. Empfänger (1, 1', 16) nach Anspruch 8 oder 9,
    wobei die Auswerteeinheit (5) eingerichtet ist, das zugeführte Signal auf Mehrwegesignalanteile zu untersuchen.

11. Empfänger (1, 1', 16) nach einem der Ansprüche 8 bis 10,
    wobei der Signaladdierer ein Analogaddierer (10) ist, und wobei zwischen dem Signaladdierer (10) und der Auswerteeinheit (5) ein Analog-Digital-Wandler (12) angeordnet ist.

12. Empfänger (1, 1', 16) nach einem der Ansprüche 8 bis 10,
    wobei in jedem Empfangszweig (8) ein Analog-Digital-Wandler (13) angeordnet ist, und wobei der Signaladdierer ein Digitaladdierer (14) ist.

**Claims**

1. Method for processing a navigation satellite signal (3),
   wherein the navigation satellite signal (3) is converted, on the receive side, into a plurality of individual signals,
   wherein the plurality of individual signals are carried on separate receive branches (8),
   **characterized in that**
   the navigation satellite signal (3) is multiplied, with amplification of the useful signal component, into the individual signals on the receive branches (8), and these individual signals are filtered, amplified and subjected to frequency conversion in the receive branches (8),
   **in that** the individual signals are added to form a sum signal after passing through the separate receive branches (8),
   and **in that** the sum signal is used to obtain an item of useful information.

2. Method according to Claim 1,
   wherein the navigation satellite signal (3) is multiplied using a plurality of active probes or transimpedance amplifiers respectively assigned to the receive branches (8).

3. Method according to one of the preceding claims, wherein the sum signal is examined for multipath signal components.

4. Method according to one of the preceding claims, wherein the plurality of individual signals are carried on receive branches (8) with the same phase behaviour.

5. Method according to Claim 4, wherein the plurality of individual signals are carried on identical receive branches (8).

6. Method according to one of the preceding claims, wherein the individual signals are added in an analogue manner to form the sum signal, and wherein the analogue sum signal is digitized in order to analyse it for multipath signal components.

7. Method according to one of Claims 1 to 5, wherein the individual signals are digitized, and wherein the digitized individual signals are added to form a digital sum signal.

8. Receiver (1, 1', 16) for a navigation satellite signal (3), having an antenna (4), having a signal distributor (7), having a plurality of receive branches (8), having a signal adder (10, 14), and having an evaluation unit (5) for obtaining an item of useful information, wherein the signal distributor (7) is connected to the antenna (4) on the input side and is connected to the plurality of receive branches (8) on the output side, and wherein the signal adder (10, 14) is connected to the plurality of receive branches (8) on the input side and is connected to the evaluation unit (5) on the output side, **characterized in that** the signal amplifier (7) is in the form of an active signal multiplier which is set up to multiply the navigation satellite signal (3), with amplification of the useful signal component, into individual signals on the receive branches (8), and devices for filtering, amplifying and converting the frequency of these individual signals are provided in the receive branches (8).

9. Receiver (1, 1', 16) according to Claim 8, wherein the signal multiplier is in the form of a plurality of active probes or transimpedance amplifiers respectively assigned to the receive branches (8).

10. Receiver (1, 1', 16) according to Claim 8 or 9, wherein the evaluation unit (5) is set up to examine the supplied signal for multipath signal components.

11. Receiver (1, 1', 16) according to one of Claims 8 to 10, wherein the signal adder is an analogue adder (10), and wherein an analogue/digital converter (12) is arranged between the signal adder (10) and the evaluation unit (5).

12. Receiver (1, 1', 16) according to one of Claims 8 to 10, wherein an analogue/digital converter (13) is arranged in each receive branch (8), and wherein the signal adder is a digital adder (14).

**Revendications**

1. Procédé de traitement d'un signal de satellite de navigation (3), le signal de satellite de navigation (3) étant transformé du côté de la réception en une pluralité de signaux individuels, les plusieurs signaux individuels étant amenés sur des branches de réception (8) séparées, **caractérisé en ce que** le signal de satellite de navigation (3) est multiplié en amplifiant la part de signal utile dans les signaux individuels sur les branches de réception (8) et ces signaux individuels dans les branches de réception (8) sont filtrés, amplifiés et convertis en fréquence, **en ce que** les signaux individuels, après avoir traversé les branches de réception (8) séparées, sont additionnés en un signal total, et **en ce que** le signal total est utilisé pour obtenir une information utile.

2. Procédé selon la revendication 1, le signal de satellite de navigation (3) étant multiplié au moyen d'une pluralité de sondes actives ou d'amplificateurs à transimpédance respectivement associés aux branches de réception (8).

3. Procédé selon l'une des revendications précédentes, le signal total étant analysé en vue de déceler des parts de signal multivoies.

4. Procédé selon l'une des revendications précédentes, les plusieurs signaux individuels étant amenés sur les branches de réception (8) avec les mêmes caractéristiques de phase.

5. Procédé selon la revendication 4, les plusieurs signaux individuels étant amenés sur des branches de réception (8) d'exécution identique.

6. Procédé selon l'une des revendications précédentes, les signaux individuels étant additionnés de manière analogique en le signal total et le signal total analogique étant numérisé en vue de l'analyse destiné à déceler des parts de signal multivoies.

7. Procédé selon l'une des revendications 1 à 5, les signaux individuels étant numérisés et les signaux individuels numérisés étant additionnés en un signal total numérique.

8. Récepteur (1, 1', 16) pour un signal de satellite de navigation (3) comprenant une antenne (4), comprenant un diviseur de signal (7), comprenant une pluralité de branches de réception (8), comprenant un additionneur de signaux (10, 14) et comprenant une unité d'interprétation (5) destinée à obtenir une information utile, le diviseur de signal (7) étant relié du côté de l'entrée à l'antenne (4) et du côté de la sortie aux plusieurs branches de réception (8), et l'additionneur de signaux (10, 14) étant relié du côté de l'entrée aux plusieurs branches de réception (8) et du côté de la sortie à l'unité d'interprétation (5), **caractérisé en ce que** l'amplificateur de signal (7) est réalisé sous la forme d'un multiplicateur de signal actif qui est conçu pour multiplier le signal de satellite de navigation (3) sur les branches de réception (8) en amplifiant la part de signal utile dans les signaux individuels, et des dispositifs de filtrage, d'amplification et de conversion en fréquence de ces signaux individuels se trouvent dans les branches de réception (8).

9. Récepteur (1, 1', 16) selon la revendication 8, le multiplicateur de signal étant réalisé sous la forme d'une pluralité de sondes actives ou d'amplificateurs à transimpédance respectivement associés aux branches de réception (8).

10. Récepteur (1, 1', 16) selon la revendication 8 ou 9, l'unité d'interprétation (5) étant conçue pour analyser le signal acheminé en vue de déceler des parts de signal multivoies.

11. Récepteur (1, 1', 16) selon l'une des revendications 8 à 10, l'additionneur de signaux étant un additionneur analogique (10) et un convertisseur analogique/numérique (12) étant disposé entre l'additionneur de signaux (10) et l'unité d'interprétation (5).

12. Récepteur (1, 1', 16) selon l'une des revendications 8 à 10, un convertisseur analogique/numérique (13) étant disposé dans chaque branche de réception (8) et l'additionneur de signaux étant un additionneur numérique (14).

**Fig. 1**

**Fig. 2**

# Fig. 3
(Stand der Technik)

<u>15</u>

Nutzsignalleistung
an der Antenne
**S = -90dBm**

Antenne

4

Rauschleistung des
Verstärkers
**N = -100dBm**

8

Verstärker

**S/N = +10dB**

17

# Fig. 4

4

7

17

20

10

Nutzsignalleistung
an der Antenne
**S = -90dBm**

8

Antenne

Rauschleistung der
einzelnen Verstärker

2-Wege Signalvervielfacher

**S1 = -90dBm**   **N1 = -100dBm**   **S1/N1 = +10dB**

Verstärker 1

Signalvervielfacher
aktiv

Signaladdierer
passiv

**S/N = +11.5dB**

**N2 = -100dBm**

Verstärker 2

50Ohm
Abschluss

**S2 = -90dBm**   **S2/N2 = +10dB**   **S1+S2 = -87dBm**
**N1+N2 = -98.5dBm**

22

21

17

8

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1154589 A2
- US 2010265875 A1
- EP 1720265 A1
- WO 9956339 A1
- CN 202471970 U
- WO 9909650 A1
- US 2002071481 A1